# EUROPEAN PATENT APPLICATION

(11) **EP 4 349 747 A2**
(43) Date of publication of application: **10.04.2024**
(21) Application number: 23195940.4
(22) Date of filing: 07.09.2023
(51) Int. Cl.: B65G 59/06, H05K 13/02

(54) **CONTAINER FEEDING DEVICE**

(30) Priority: 06.10.2022 MY UI2022005559
(71) Applicant: Jabil Inc., St. Petersburg, FL 33716 (US)
(72) Inventor: Singh, Harpuneet, Dublin, 94568 (US); Hu, Lei, 528511 Singapore (SG); Huang, Ying-Chieh, Jingzhou City, Hubei Province, 433318 (CN); Hsieh, Wei-Hsiu, 505022 Lugang Town, Changhua County (TW); Zheng, Xiao-Ting, Shanwei City, Guangdong Province, 516600 (CN); Chu, Chien-Cheng, 420073 Taichung City (TW); Anil, Arya, 695006 Trivandrum, Kerala (IN)
(74) Representative: Gulde & Partner

(57) **Abstract**

A container feeding device includes a casing (22) and first and second latch members (41, 42). The casing (22) defines a lower retaining space (220) for receiving a plurality of containers (1) that are stacked on one another. The first latch member (41) is operable to enter the lower retaining space (220) for supporting a bottommost container (1), or leave the lower retaining space (220) to release the bottommost container (1). The second latch member (42) enters the lower retaining space (220) to support a second bottommost container (1) when the bottommost container (1) is released by the first latch member (41).

## Description

The disclosure relates to a conveying device, and more particularly to a container feeding device.

In a production line, components may be carried by trays that are conveyed by a tray feeder. However, the tray feeder may need to be equipped with two tracks in order to send a full tray out and return an empty tray back in a horizontal direction; as a result, the tray feeder may occupy a relatively large space.

Therefore, an object of the disclosure is to provide a container feeding device with a reduced size.

According to the disclosure, the container feeding device includes a casing and a dispensing unit. The casing defines a lower retaining space therein. The lower retaining space is adapted for receiving a plurality of containers that are stacked on one another. The dispensing unit includes a first latch member and a second latch member. The first latch member is operable to enter the lower retaining space for supporting a bottommost container, or leave the lower retaining space to release the bottommost container. The second latch member is located above the first latch member, and is operable to enter the lower retaining space for engaging and supporting a second bottommost container, or leave the lower retaining space to release the second bottommost container. The second latch member enters the lower retaining space to support the second bottommost container when the bottommost container is released by the first latch member.

Other features and advantages of the disclosure will become apparent in the following detailed description of the embodiment(s) with reference to the accompanying drawings. It is noted that various features may not be drawn to scale.
Figure 1 is a perspective view illustrating an embodiment of a container feeding device according to the disclosure.
Figure 2 is a perspective view illustrating a container of the embodiment.
Figure 3 is a schematic fragmentary side view illustrating the embodiment.
Figure 4 is a schematic fragmentary side view illustrating a dispensing module of the embodiment in a retaining state.
Figure 5 is a schematic fragmentary side view illustrating the dispensing module in a release state.
Figure 6 is a schematic fragmentary side view illustrating a retention member of the embodiment in a retaining state.
Figure 7 is a schematic fragmentary side view illustrating the retention member in a release state.
Figure 8 is a schematic fragmentary perspective view illustrating two support racks of the embodiment in a retaining state.
Figure 9 is a schematic fragmentary perspective view illustrating the support racks in a release state.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

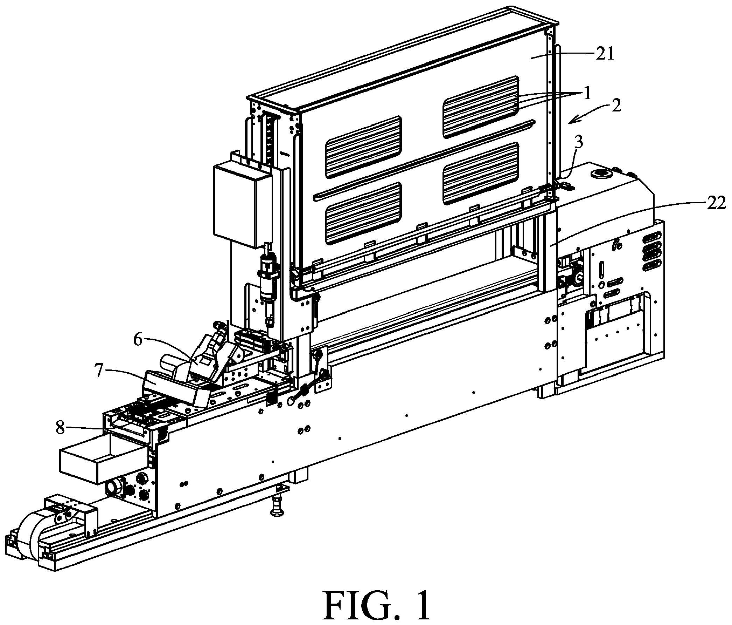

Referring to Figures 1 to 3, an embodiment of the container feeding device according to the disclosure is for conveying containers 1, and includes a casing 2, two dispensing units 4 and a retention member 5.

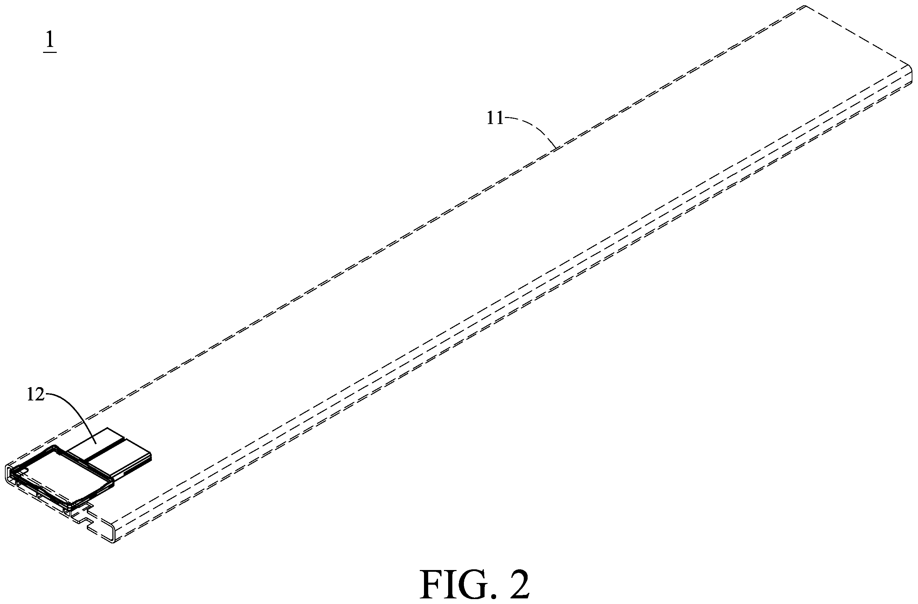

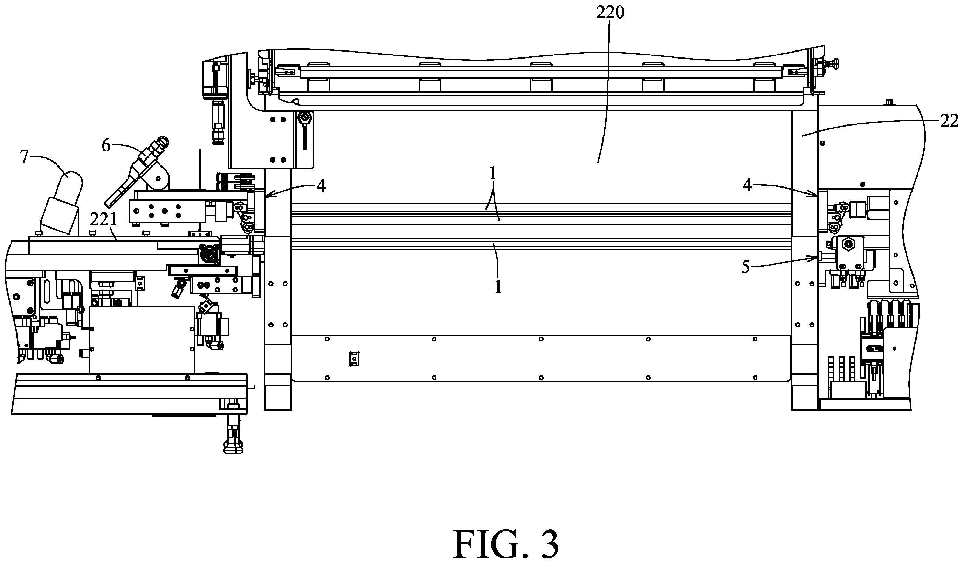

The casing 2 includes a lower casing 22 that defines a lower retaining space 220 therein for retaining a plurality of containers 1 that are stacked on one another. The lower casing 22 is formed with a platform 221 (see Figure 3) that is in front of the lower retaining space 220 and that communicates with the lower retaining space 220. With particular reference to Figure 2, in this embodiment, each of the containers 1 is substantially tubular, and includes a tubular wall 11 that defines a receiving space 111 therein to receive components (not shown), and a pusher 12. The pusher 12 is driven to move within the receiving space for pushing the components out of the receiving space 111.

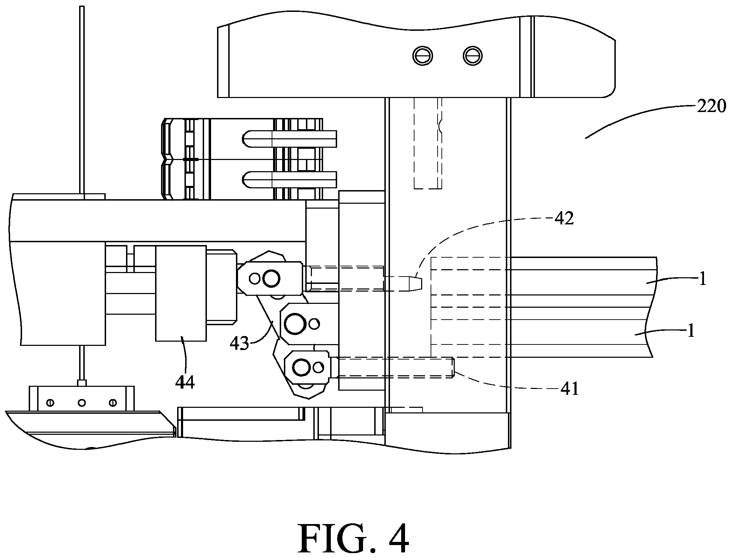

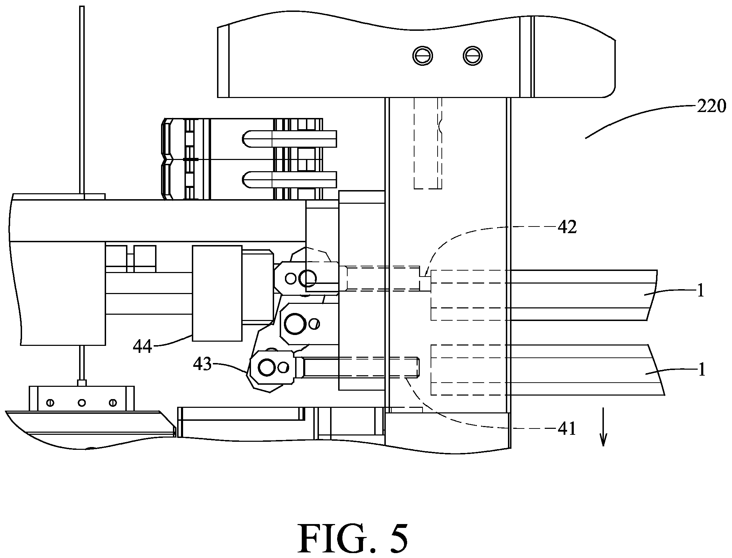

The dispensing units 4 are mounted to the lower casing 22, and are spaced apart from each other. With further reference to Figures 4 and 5, each of the dispensing units 4 includes a first latch member 41 that is movably mounted to the lower casing 22, a second latch member 42 that is movably mounted to the lower casing 22 and that is located above the first latch member 41, a rocker member 43 that is rotatably mounted to the lower casing 22, and an actuator 44. In one embodiment, each of the first latch member 41 and the second latch member 42 is movable relative to the lower casing 22 in a front-rear direction. For the sake of brevity, only one of the dispensing units 4 is described in the following paragraphs.

The dispensing unit 4 is convertible between a retaining state (see Figure 4) and a release state (see Figure 5). When the dispensing unit 4 is in the retaining state, the first latch member 41 enters the lower retaining space 220 to support a bottommost one of a stack of containers 1, and the second latch member 42 leaves the lower retaining space 220 so as to not hinder downward movement of the containers 1. At this time, the whole stack of containers 1 in the lower retaining space 220 are supported by the first latch member 41. When the dispensing unit 4 is in the release state, the second latch member 42 enters the lower retaining space 220 to engage and support the second bottommost one of the containers 1, and the first latch member 41 leaves the lower retaining space 220 so as to release the bottommost one of the containers 1. The rocker member 43 has a middle portion rotatably mounted to the lower casing 22, and opposite end portions respectively, slidably and rotatably connected to the first latch member 41 and the second latch member 42. The rocker member 43 serves to drive movement of one of the first and second latch members 41, 42 in response to movement of the other one of the first and second latch members 41, 42. In one embodiment, the actuator 44 is connected to the second latch member 42 for driving movement of the second latch member 42, and the first latch member 41 moves in response to the movement of the second latch member 42 via the rocker member 43. In one embodiment, the actuator 44 may be configured as an air cylinder or a hydraulic cylinder that is extendable in a horizontal direction. When the actuator 44 extends or retracts to drive movement of one of the first and second latch members 41, 42, the other one of the first and second latch members 41, 42 is driven to move in a direction opposite to that of the one of the first and second latch members 41, 42 by the rocker member 43, so as to convert the dispensing unit 4 between the retaining state (see Figure 4) and the release state (see Figure 5).

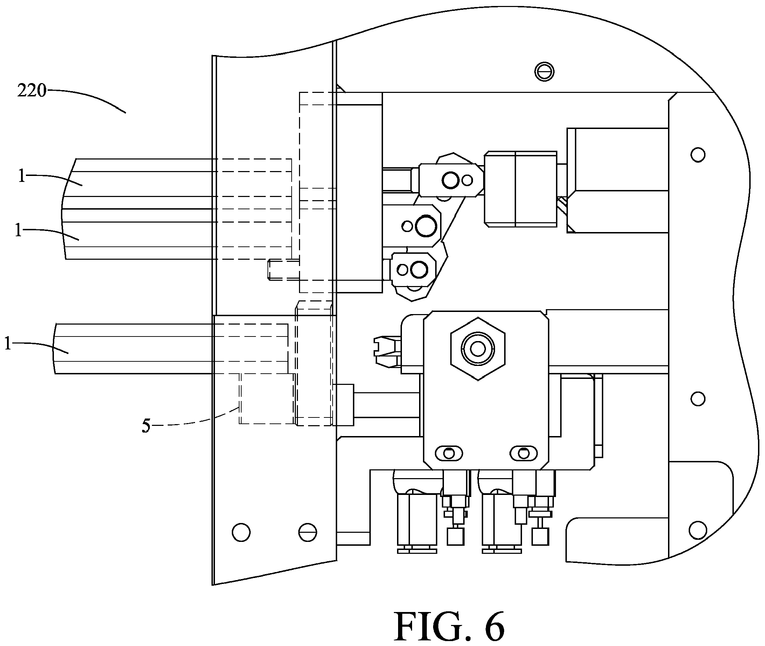

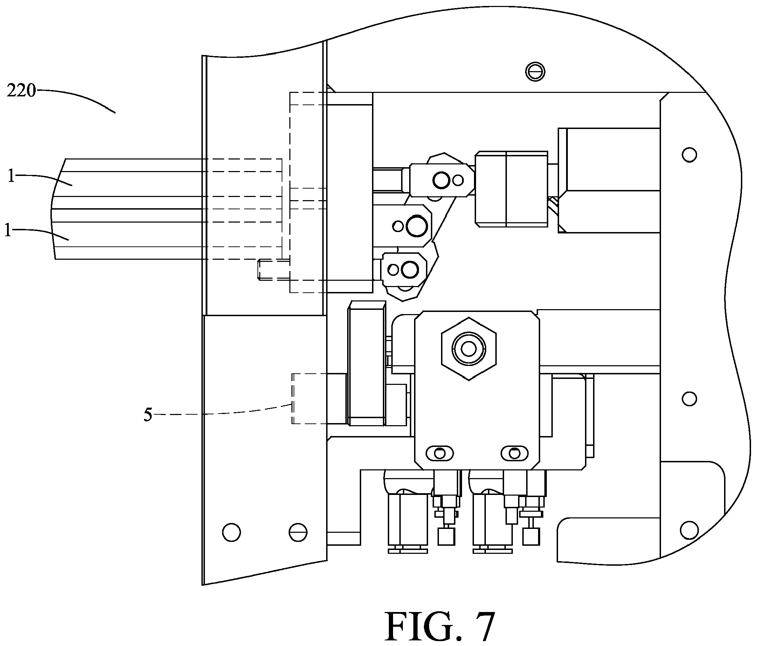

Referring further to Figures 6 and 7, the retention member 5 is movably mounted to the lower casing 22, is located below the dispensing units 4, and is convertible between a retaining state (see Figure 6) in which the retention member 5 enters the lower retaining space 220, and a release state (see Figure 7) in which the retention member 5 leaves the lower retaining space 220. When the dispensing unit 4 is switched from the retaining state to the release state, the retention member 5 is in the retaining state, so the bottommost one of the containers 1 is released by the first latch member 41 (see the arrow in Figure 5) and supported by the retention member 5. The retention member 5 supports the container 1 released by the first latch member 41 at a position such that the pusher 12 of the container 1 is able to push the components in the container 1 onto the platform 221 (see Figure 3) one after another. The platform 221 may be equipped with a conveyor belt that conveys the components on the platform 221.

In one embodiment, the container feeding device further includes a nozzle 6, a sucker 7 and a blocking member 8 that are disposed on the platform 221. The nozzle 6 is located above the platform 221, is proximate to the container 1 supported by the retention member 5, and ejects a gas forwardly and downwardly for pushing the components to advance. The blocking member 8 is distal from the container 1 supported by the retention member 5. The sucker 7 is located between the nozzle 6 and the blocking member 8, and is for sucking dust on the platform 221. The nozzle 6 pushes a frontmost one of the components on the platform 221 toward the blocking member 8. The blocking member 8 is operable to protrude from the platform 221 for limiting movement of the frontmost one of the components. When the blocking member 8 blocks the frontmost one of the components, a quality inspection is performed to determine whether or not the frontmost one of the components is qualified and should be picked by a robot arm.

After the components in the container 1 are discharged and are pushed onto the platform 221, the retention member 5 is switched to the release state (see Figure 7) so that the empty container 1 falls out of the lower retaining space 220 to be gathered. Subsequently, the retention member 5 is switched to the retaining state for supporting another container 1 released by the first latch member 41.

Referring back to Figure 1, in one embodiment, the casing 2 may further include an upper casing 21 that is disposed above the lower casing 22, and the container feeding device may further include two support racks 3 (only one is visible in Figure 1) that are respectively mounted to two opposite lateral sides of a bottom portion of the upper casing 21.

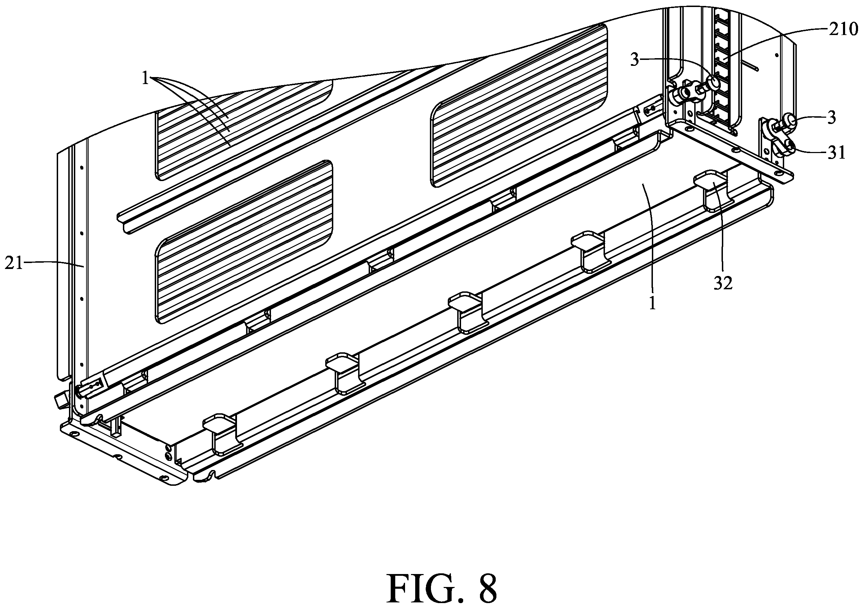

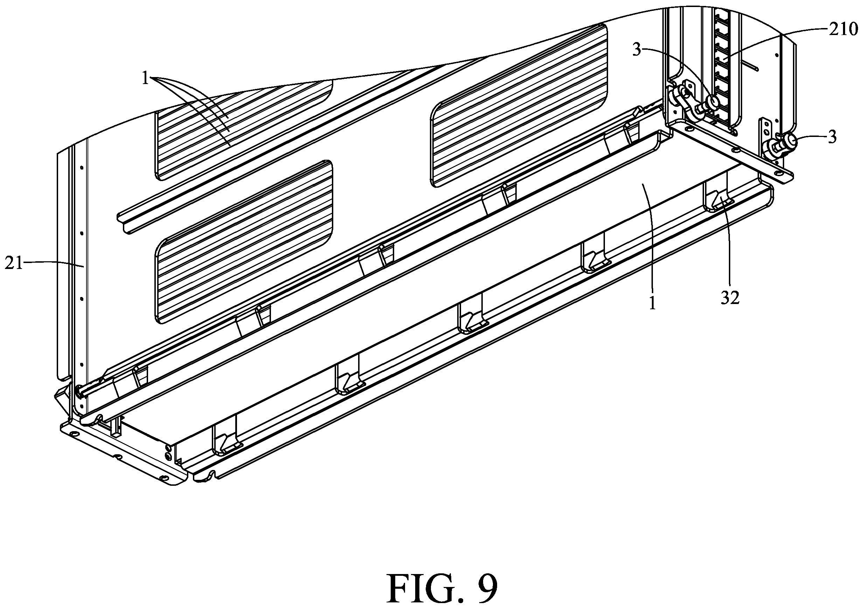

The upper casing 21 defines an upper retaining space 210 therein for retaining a plurality of containers 1 that are stacked on one another. Referring further to Figures 8 and 9, each of the support racks 3 is substantially elongate, and has a pivot portion 31 that is pivotally mounted to the upper casing 21, and a plurality of support portions 32 that are connected to the pivot portion 31. Each of the support racks 3 is convertible between a retaining state (see Figure 8) in which the support portions 32 enter the upper retaining space 210 to support the stack of containers 1, and a release state (see Figure 9) in which the support portions 32 leave the upper retaining space 210 so that the stack of containers 1 fall out of the upper retaining space 210 and into the lower retaining space 220 so as to be supported by the first latch members 41 or the second latch members 42 of the dispensing modules 4. In this embodiment, the support portions 32 of each of the support racks 3 are configured as protruding plates that are spaced apart from each other. As shown in Figures 8 and 9, the pivot portion 31 of each of the support racks 3 is operable to rotate the support portions 32 between two different positions. When in the retaining state (see Figure 8), the support portions 32 of each of the support racks 3 substantially extend in a horizontal direction into the upper retaining space 210 to support the stack of containers 1. When in the release state (see Figure 9), the support portions 32 of each of the support racks 3 incline downwardly and leave the upper retaining space 210 so that the stack of containers 1 fall out of the upper retaining space 210 and into the lower retaining space 220 to be supported by the dispensing modules 4. By virtue of the the support racks 3, the stack of containers 1 in the upper retaining space 210 may be fed into the lower retaining space 220 in batches, so that the dispensing modules 4 may be prevented from bearing a excessive load.

In the container feeding device according to the disclosure, the containers 1 receiving components therein are stacked in the upper retaining space 210 and the lower retaining space 220, and are dispensed onto the retention member 5 one by one to be discharged. The empty containers 1 relaesed by the retention member 5 can be easily gathered.

In summary, in this disclosure, each container 1 is conveyed in a vertical direction in the container feeding device, and need not move relative to the container feeding device after falling onto the retention member 5 and beginning to discharge. Therefore, the container feeding device according to the disclosure achieves the purpose of occupying a relatively small space.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A container feeding device comprising:
a casing (2) defining a lower retaining space (220) therein, the lower retaining space (220) being adapted for receiving a plurality of containers (1) that are stacked on one another;
**characterized by**:
a dispensing unit (4) including
a first latch member (41) that is operable to enter the lower retaining space (220) for supporting a bottommost container (1), or leave the lower retaining space (220) to release the bottommost container (1), and
a second latch member (42) that is located above the first latch member (41), and that is operable to enter the lower retaining space (220) for engaging and supporting a second bottommost container (1), or leave the lower retaining space (220) to release the second bottommost container (1), the second latch member entering the lower retaining space (220) to support the second bottommost container (1) when the bottommost container (1) is released by the first latch member (41).

2. The container feeding device as claimed in claim 1, wherein the casing (2) includes a lower casing (22) that defines the lower retaining space (220), the dispensing unit (4) further including a rocker member (43) that has a middle portion rotatably mounted to the lower casing (22), and two opposite end portions respectively, slidably and rotatably connected to the first latch member (41) and the second latch member (42).

3. The container feeding device as claimed in claim 2, wherein the dispensing unit (4) further includes an actuator (44) that is connected to the second latch member (42) for driving movement of the second latch member (42), the first latch member (41) moving in response to the movement of the second latch member (42) via the rocker member (43).

4. The container feeding device as claimed in claim 1, each of the containers (1) receiving components therein, wherein the casing (2) includes a lower casing (22) that is formed with a platform (221) in front of the lower retaining space (220), the platform (221) being adaped to convey the components discharged out of the containers (1).

5. The container feeding device as claimed in claim 4, further comprising a nozzle (6) that is disposed on the platform (221), the nozzle (6) ejecting a gas for pushing the components on the platform (221) to advance.

6. The container feeding device as claimed in claim 4, further comprising a blocking member (8) that is disposed on the platform (221), the blocking member (8) being operable to protrude from the platform (221) for limiting movement of the components on the platform (221).

7. The container feeding device as claimed in claim 4, further comprising a sucker (7) that is disposed on the platform (221) for sucking dust on the platform (221).

8. The container feeding device as claimed in claim 1, wherein the casing (2) includes a lower casing (22) that defines the lower retaining space (220), and an upper casing (21) that defines an upper retaining space (210) located above the lower retaining space (220), the upper retaining space (210) receiving a plurality of containers (1) that are stacked on one another.

9. The container feeding device as claimed in claim 8, further comprising two support racks (3) that are respectively mounted to a bottom portion of the upper casing (21), and that releasably support the containers (1) in the upper retaining space (210).

10. The container feeding device as claimed in claim 9, wherein each of the support racks (3) has a pivot portion (31) that is pivotally mounted to the upper casing (21), and a support portion (32) that is connected to the pivot portion (31), each of the support racks (3) being convertible between a retaining state in which the support portion (32) enters the upper retaining space (210) to support the containers (1) in the upper retaining space (210), and a release state in which the support portion (32) leaves the upper retaining space (210) so that the containers (1) fall out of the upper retaining space (210) and into the lower retaining space (220) so as to be supported by the dispensing module (4).

11. The container feeding device as claimed in claim 10, wherein the support portions (32) of each of the support racks (3) are configured as protruding plates that are spaced apart from each other, the pivot portion (31) of each of the support racks (3) being operable to rotate the support portions (32) between two different positions.

12. The container feeding device as claimed in claim 1, further comprising a retention member (5) that is movably mounted to the casing (2), and that is convertible between a retaining state in which the retention member (5) enters the lower retaining space (220), and a release state in which the retention member (5) leaves the lower retaining space (220), when the dispensing unit (4) is switched from the retaining state to the release state, the retention member (5) being in the retaining state, so the bottommost one of the containers (1) in the lower retaining space (220) is released by the first latch member (41) and supported by the retention member (5).

13. The container feeding device as claimed in claim 3, wherein the actuator (44) is extendable in a horizontal direction, when the actuator (44) extends or retracts to drive movement of one of the first and second latch members (41, 42), the other one of the first and second latch members (41, 42) being driven to move in a direction opposite to that of the one of the first and second latch members (41, 42) by the rocker member (43).
